# EUROPEAN PATENT SPECIFICATION

(11) **EP 3 193 027 B1**
(45) Date of publication and mention of the grant of the patent: **15.04.2020**
(21) Application number: 17151408.6
(22) Date of filing: 13.01.2017
(51) Int. Cl.: F16B 19/00

(54) **WALL PLUG-LIKE INSERT AND FASTENING METHOD**
WAND-EINSATZSTÜCK UND BEFESTIGUNGSMETHODE
CHEVILLE ET METHODE DE FIXATION

(30) Priority: 15.01.2016 DE 102016100610
(43) Date of publication of application: 19.07.2017
(73) Proprietor: Newfrey LLC, New Britain, CT 06053 (US)
(72) Inventor: Salternberger, Reimar, 35394 Giessen (DE); Stau, Bastian, 35394 Giessen (DE); Roseman, Frank, 35394 Giessen (DE)
(74) Representative: SBD IPAdmin

(56) References cited:
- EP-A1- 1 593 885
- WO-A1-2012/118131
- DE-A1- 19 652 782
- DE-A1-102011 120 724
- US-A1- 2006 086 765

## Description

The present invention relates to a wall plug-like insert, having a head and a stem extending in a longitudinal direction from the head, wherein the stem is designed to be introduced into an opening in a component, such as a metal sheet, with the result that the head is arranged on a component upper side of the component, and wherein a sealing element is arranged on the head, said sealing element being designed to establish a seal, surrounding the stem, between the head and the component upper side of the component.

The present invention furthermore relates to a method for producing a fastening arrangement, comprising the following step: installing an insert of the type stated above in an opening in a component, wherein the insert has latching means in order to engage behind the opening.

A wall plug-like insert and an associated fastening method have been disclosed by document US 2004/0057812 A1, for example.

In this case, the sealing element is produced from a fusible plastic body. The fastening method is carried out with the application of heat, wherein the plastic, which is, in particular, an adhesive, melts, such that the melted material flows into an annular gap between the stem of the insert and the inner side of the component opening. The plastic material then cools down again and solidifies, thus creating a fluid-tight fastening device with which fluid cannot pass from one side of the component to the other side.

Document US 2009/0208697 A1 discloses a comparable insert with a fastening method carried out in the same way, although the thermoplastic adhesive material of the sealing element is produced in such a way that a relatively rough surface is obtained, which can avoid adhesion between such sealing elements. Removal from an injection mould can thereby be simplified too. Document US2006/0086765 discloses an insert with a sealing member with a upper and a lower bead, the upper bead being radially offset from the lower bead. DE 102011120724 A1 discloses a fastening element with a sealing part faming an annular disc.

Finally, document US 2012/0131772 A1 proposes to provide an annular opening on a head, said opening facing the stem, wherein a sealing lip is formed on a circumferential segment of the head facing the stem. The sealing lip can be part of a sealing element which, in turn, is moulded onto the head. The sealing element can be produced at least partially from a material which expands under the action of heat. In particular, the sealing element is heated to a temperature above a melting point of the sealing element after the insertion of the insert into the opening, thus setting up a kind of thermoplastic weld between the sealing element and the component upper side.

The sealing element composed of a hot melt adhesive mentioned at the outset with reference to document US 2004/0057812 A1 is produced from a relatively expensive material. The use of the hot melt adhesive as a sealing element furthermore has the disadvantage that these sealing elements can generally only be transported in foil-laminated bags. Moreover, there can be damage to the component upper side during the carrying out of the fastening method with the known wall plug-like insert.

Given this background situation it is an object of the invention to provide an improved insert and an improved method for producing a fastening arrangement.

The invention relates to a wall plug-like insert according to claim 1.

The present invention allows reducing the costs for the sealing element and improves stability of the sealing annular disc within the recess of the head. In addition, the sealing element now relies substantially on elastic sealing properties and less on the fact that the material of the sealing element melts during a heating process. During a heating process, such materials do not become liquid.

Moreover, the sealing element can be produced in such a way and mounted on the head of the insert in such a way that damage to the component can be avoided. The sealing element can be produced in such a way that additional damping, which reduces a latching noise caused by the setting process, is obtained.

In particular, the upper side and the lower side are designed as flat sides, which can define flat plans. In this case, the upper side and the lower side can be smooth, but can also be rough.

According to the invention the annular bead (in other words an annular protrusion) is formed on the upper side and on the lower side of the flat annular disc.

An annular bead (annular protrusion) of this kind allows better sealing and additional damping during the process of inserting the insert into the opening. In other words, damage to the component upper side can thereby be prevented in a particularly effective manner. Moreover, a latching noise caused by the setting process can thereby be reduced.

The annular bead can furthermore be compressed elastically in a suitable manner since the material thereof can yield radially, at least partially, thus ensuring a powerful elastic effect which can lead to an enhanced sealing effect.

The present invention is also directed a method for producing a fastening arrangement, comprising the following step: an insert according to the invention is installed in an opening in a component, wherein the insert has latching means in order to engage behind the opening, wherein the sealing element is compressed between the head and the component upper side of the component. The compression of the sealing element in the method according to the invention is accomplished, in particular, in the form of elastic compression.

The insert can be installed on a component, e.g. a vehicle body, before a painting process. A painting process can then be performed on the component. During this process, there may be heating, during which the sealing element can melt somewhat. However, the elastic compression properties of the sealing element are preferably not limited thereby. In other embodiments, heating does not lead to any melting of the material of the sealing element. In some embodiments, the adhesion behaviour can be further improved by the process heat which arises during the painting process, and this can lead to enhancement of the sealing effect.

In advantageous embodiments, it is possible to transport the sealing elements loosely in bulk, i.e. without separate foil-laminated packaging bags or the like. Moreover, the method can be carried out in such a way that the head of the insert does not touch the component upper side.

It is furthermore preferred if the sealing element overall is produced from a single material, such as the thermoplastic elastomer or from a crosslinked rubber material. In other embodiments, the materials can also be combined with one another.

It is of particular advantage if the thermoplastic elastomer from which the sealing element is produced is selected from the following group: TPE-O, TPE-V, TPE-U, TPE-C, TPE-S, TPE-A. This has the advantage that the TPE enters into an adhesive bond with the paint and thus that a particularly advantageous and leaktight joint is formed. Besides, the TPE cannot be bought into a flowable state, even during the painting process or other process involving an increase of the temperature. For example, TPE melts but cannot be bought into a flowable (liquid) state in a temperature range between 130 degrees Celsius and 190 degrees Celsius.

Here, materials of the TPE-O (or TPO) type, are preferably thermoplastic elastomers based on olefins, primarily PP/EPDM (polypropylene/ethylene-propylene-diene monomer).

The material TPE-V preferably contains crosslinked thermoplastic elastomers based on olefins, primarily PP/EPDM.

TPE-U contains thermoplastic elastomers based on urethanes.

TPE-E contains thermoplastic polyester elastomers or thermoplastic co-polyesters, and TPE-S contains styrene block copolymers, such as SPS, SEBS, SEPS, SEEPS and MBS. In an embodiment, the thermoplastic elastomer from which the sealing element is produced is a TPS-SEBS thermoplastic elastomer according to the DIN EN ISO 18064 nomenclature. TPS-SEBS is characterised by improved heat resistance, chemical resistance, scratch resistance and long service life applications.

Finally, TPE-A contains thermoplastic co-polyamides.

As an alternative, the sealing element can also be produced from a pure crosslinked rubber material, that is to say completely from a crosslinked material, such as EPDM.

The sealing element can be connected loosely to the insert, e.g. can be pushed onto the stem in the form of a ring element. However, the sealing element can be connected to the head in some other way, e.g. by pressing in or by adhesive bonding or by thermoplastic welding or the like.

According to another preferred embodiment, the annular bead has a radially inner side and a radially outer side in radial section, wherein the radially outer side is designed as a step aligned in the longitudinal direction and/or wherein the radially inner side is rounded.

The formation of the radially outer side as a step can lead to particularly effective sealing since good sealing between the radially inner side and the radially outer side can be achieved even in the presence of a high pressure on the radially outer side.

According to another preferred embodiment, the annular disc has a first radial extent, wherein the annular bead has a second radial extent, wherein the ratio of the second radial extent to the first radial extent is in a range of from 0.05 to 0.75, in particular in a range of from 0.1 to 0.4.

Such a ratio has proven particularly advantageous since a particularly good sealing effect can be achieved.

According to the invention the annular disc has a first thickness along the longitudinal direction, wherein the annular bead has a second thickness along the longitudinal direction, wherein the ratio of the second thickness to the first thickness is in a range of from 1.3 to 2.

Such a ratio has proven particularly advantageous since it allows a good relationship between pressure of the sealing element applied to the component and sealing effect.

According to another preferred embodiment, the annular bead projects in the longitudinal direction relative to the head.

It is furthermore preferred if the annular bead projects in the longitudinal direction towards the stem relative to the head on the lower side of the flat annular disc.

In this case, contact between the head and the component upper side during installation can be avoided.

According to the invention the head has an annular recess on a longitudinal side facing the stem, into which recess the sealing element is inserted.

The sealing elements can thereby be well protected from external influences.

It is of particular advantage here if the sealing element projects in the longitudinal direction relative to the head.

Overall, a high sealing effect can be achieved especially when an annular bead in the form of a sealing lip is provided on the upper side and on the lower side. Damage to the component upper side can furthermore be reduced.

Moreover, the transport of the sealing element or of the wall plug-like insert can be simplified since the insert does not contain any adhesive elements, which would have to be protected by foil-laminated packaging.

The insert with the head and the stem extending from the latter is preferably designed as an integral plastic part, wherein the sealing element is attached to this plastic part in the manner described above, either by loose connection or by fitting in any desired manner.

It is self-evident that the features mentioned above and those which remain to be explained can be used not only in the respectively indicated combination but also in other combinations or in isolation without exceeding the scope of the present invention, which is defined by the claims.

Illustrative embodiments of the invention are shown in the drawing and are explained in greater detail in the following description, in which:
- Fig. 1: shows a schematic longitudinal section through a fastening arrangement with an embodiment according to the invention of a wall plug-like insert;
- Fig. 2: shows a perspective schematic view of another embodiment of an insert according to the invention, which has been partially cut away in a region of a sealing element;
- Fig. 3: shows a schematic radial section through the sealing element of the insert in Fig. 2;
- Fig. 4: shows a perspective schematic view of another embodiment of an insert according to the invention;
- Fig. 5: shows a perspective schematic view of the insert in Fig. 4; and
- Fig. 6: shows a perspective schematic view of a sealing element of an insert according to the invention.

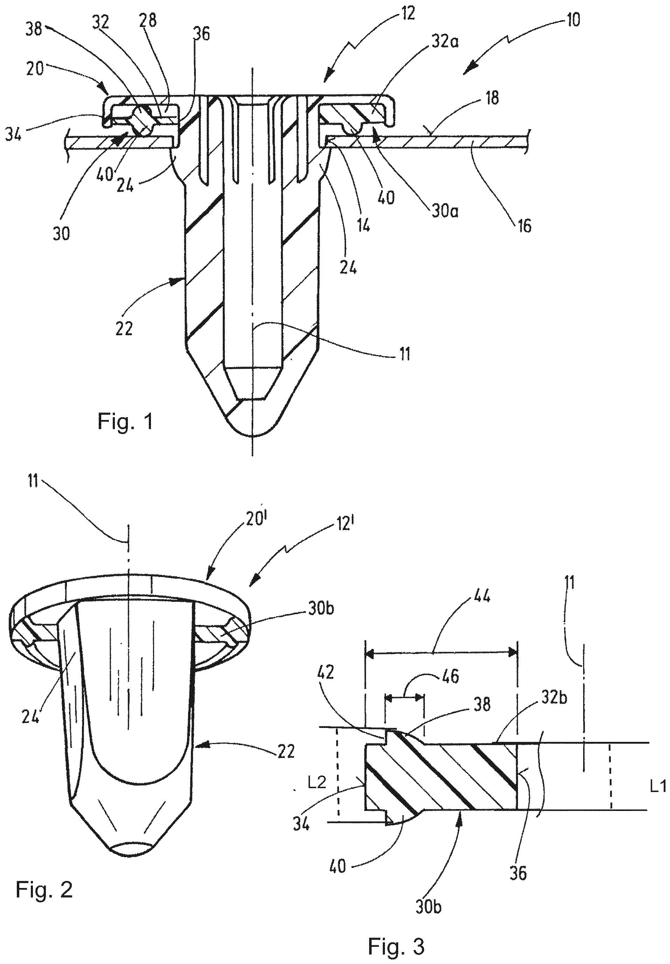

The embodiments described in figures 1, 2 and 3 do not fall within the scope of the invention.

A fastening arrangement 10, the basic structure and operation of which is comparable to a fastening arrangement of the kind disclosed by document US 2004/0057812 A1, is shown in schematic form in Fig. 1. Reference is therefore made to the disclosure of this document by way of supplementary information.

The fastening arrangement 10 comprises a wall plug-like insert 12, which can be inserted into an opening 14 in a component 16. In this case, the insert 12 comprises a head 20, which rests on a component upper side 18 of the component 16 or is at least arranged adjacent thereto in the inserted state. A stem 22 of the insert 12 extends through the opening 14 in the installed state. The stem 22 extends along a longitudinal direction 11.

Projections 24, which are capable of radially elastic deformation or can be pushed inwards in a radially elastic manner, thus allowing the projections 24 to engage behind a lower side of the component 16 in the inserted state, are preferably formed on the stem 22.

The installation forces of the wall plug-like insert 12 into the opening 14 depends directly of the shape and the dimensions of the projections 24. The installation forces may for example vary between 40 Newton and 280 Newton, or preferably between 40 Newton and 180 Newton. The installation forces may also be between 50 and 70 Newton. The stem 22 comprises for example four outer surfaces.

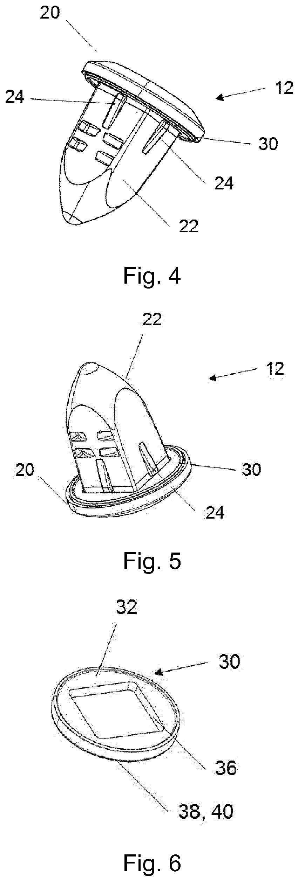

Figs. 4 and 5 show alternative embodiments, which correspond in general to the embodiment in Fig. 1 as regards structure and operation. Identical elements are therefore denoted by identical reference signs. It is essentially the differences which are explained below.

As illustrated in Fig. 4 and Fig. 5, each surface may comprise a projection 24. The projection 24 may extend along the longitudinal direction 11 on the outer surface. For example, the projection 24 extends on the outer surface along the longitudinal direction 11 over a distance being between about one-half and one-third of the entire length of the stem 22. The width of the projection 24 along a direction orthogonal to the longitudinal direction 11 can extend over a distance being less than one-third of the entire width of a stem outer surface, and preferably less than one-fifth of the entire width of a stem outer surface. A small width of the projection allows to reduce the installation forces.

The component 16 is preferably a part of the body of a motor vehicle.

An annular recess 28, into which a sealing element 30 is inserted, is formed on a lower side of the head 20, said lower side facing the stem 22.

A sealing element 30 is shown schematically on the left-hand side in Fig. 1, and an alternative embodiment of a sealing element 30a is shown in schematic form on the righthand side in Fig. 1. The sealing elements 30, 30a correspond to one another as regards structure and operation. Identical elements are therefore denoted by identical reference signs. It is essentially the differences which are explained below.

Sealing element 30 comprises an annular disc 32, which is preferably accommodated fully in the annular recess 28. An outer circumference 34 of the annular disc 32 rests on an inner circumference of the annular recess 28. An inner circumference 36 of the annular disc 32 is preferably adjacent to the stem 22. In an embodiment the annular disc 32 does not project beyond the recess 28.

An annular upper-side bead (protrusion) 38 is formed on an upper side (not denoted specifically) of the annular disc 32. In a corresponding way, an annular lower-side bead 40 is formed on a lower side (not denoted specifically) of the annular disc 32. The annular disc 32 can have a constant thickness.

The annular beads (annular protrusions) 38, 40 are preferably formed symmetrically with respect to a radial centre plane of the annular disc 32. In this case, the annular upper-side bead 38 preferably rests on a bottom of the annular recess 28. In the state in which it is inserted in this way, the annular lower-side bead 40 projects axially towards the stem 22 overall, relative to the annular recess 28 or relative to the head.

In the alternative embodiment of a sealing element 30a, an annular disc 32a is likewise provided, but the sealing element 30a has no annular bead on the upper side and consequently rests substantially flat, by means of the upper side, on a bottom of the annular recess 28. As in the embodiment of sealing element 30, however, an annular lower-side bead 40 is formed on the lower side of annular disc 32a.

The annular disc 32 has a first thickness L1 along the longitudinal direction 11. The annular bead 38, 40 ; 40 has a second thickness L2 along the longitudinal direction 11. The ratio of the second thickness L2 to the first thickness L1 is in a range of from 1.3 to 2.

The sealing element 30 is preferably produced from a thermoplastic elastomer (TPE). The insert 12 itself is produced from a relatively hard plastics material.

By virtue of the elastic properties of the thermoplastic elastomer, the sealing element 30 is deformed in an axial direction, more specifically elastically, during the installation of the insert 12 in the opening 14, such that an annular seal is formed between the component 16 and the head 20, shielding or sealing off the opening 14 in the component 16 so that fluids cannot pass from the component upper side 18 to the component lower side and vice versa.

In this case, the sealing element 30, 30a is in each case preferably produced integrally from a single material. Instead of a thermoplastic elastomer, which is preferably an uncrosslinked thermoplastic elastomer, the sealing element could eventually also be produced from a crosslinked rubber material, e.g. from EPDM.

Before installation on the opening 14, at least the annular lower-side bead 40 projects towards the stem 22 relative to the head 20, with the result that it is essentially the annular bead 40 which comes into contact with the component upper side 18, not the head 20 as such, during installation.

In an embodiment, the annular disc 32 does not project beyond the head 20. More particularly, the annular disc 32 does not project beyond the recess 28 of the head whereas the annular bead 40 does project beyond the head.

Figs. 2 and 3 show alternative embodiments, which correspond in general to the embodiment in Fig. 1 as regards structure and operation. Identical elements are therefore denoted by identical reference signs. It is essentially the differences which are explained below.

In the embodiment in Figs. 2 and 3, a wall plug-like insert 12' has a sealing element 30b, which has an annular upper-side bead 38 and an annular lower-side bead 40.

A radially inner side of the annular beads 38, 40 is in each case of rounded design. A radially outer side of the annular beads 38, 40 is in each case designed in the form of a step 42, which is aligned substantially in a longitudinal direction.

Moreover, the annular beads 38, 40 each extend over a radial extent 46, whereas the annular disc 32b extends over a radial extent 44. The ratio of the second radial extent to the first radial extent is preferably in a range of from 0.1 to 0.4.

Fig. 6 shows an embodiment of the sealing element 30. The annular bead 38, 40 is formed at the outer circumference 34 of the annular disc 32.

## Claims

1. Wall plug-like insert (12), having a head (20) and a stem (22) extending in a longitudinal direction (11) from the head (20), wherein the stem (22) is designed to be introduced into an opening (14) in a component (16), such as a metal sheet, with the result that the head (20) is arranged on a component upper side (18) of the component (16), and wherein a sealing element (30) is arranged on the head (20), said sealing element being designed to establish a seal, surrounding the stem (22), between the head (20) and the component upper side (18) of the component (16), wherein the sealing element is produced from a thermoplastic elastomer or from a crosslinked rubber material, wherein the sealing element (30) is designed as a flat annular disc (32), which has an upper side facing the head (20) and an opposite lower side, which is associable with the component (16), and wherein an annular bead (38, 40; 40) is formed on the upper side and on the lower side of the flat annular disc (32), wherein the annular disc (32) has a first thickness (L1) along the longitudinal direction (11), wherein the annular bead (38,40 ;40) has a second thickness (L2) along the longitudinal direction (11), wherein the annular bead (38, 40) is formed at an outer circumference (34) of the annular disc (32), and **characterized in that** the ratio of the second thickness (L2) to the first thickness (L1) is in a range of from 1.3 to 2, **in that** the head (20) has an annular recess (28) on a longitudinal side facing the stem (22), into which recess the sealing element (30) is inserted and **in that** an outer circumference (34) of the annular disc (32) rests on an inner circumference of the annular recess (28).

2. Wall plug-like insert according to Claim 1, **characterized in that** the sealing element (30) is produced from a styrene block copolymers (TPS) thermoplastic elastomer.

3. Wall plug-like insert according to Claim 1 or 2, **characterized in that** the annular bead (38, 40; 40) has a radially inner side and a radially outer side in radial section, wherein the radially outer side is designed as a step (42) aligned in the longitudinal direction (11) and/or wherein the radially inner side is rounded.

4. Wall plug-like insert according to one of Claims 1 to 3, **characterized in that** the annular bead (38, 40; 40) projects in the longitudinal direction (11) towards the stem (22) relative to the head (20) on the lower side of the flat annular disc (32).

5. Wall plug-like insert according to any of claims 1 to 4, **characterized in that** the sealing element (30) projects in the longitudinal direction (11) relative to the head (20).

6. Wall plug-like insert according toany of claims 1 to 5, **characterized in that** the annular bead (40) projects in the longitudinal direction (11) relative to the head (20).

7. Method for producing a fastening arrangement (10), comprising the following step: installing a wall plug-like insert (12) in an opening (14) in a component (16), wherein the wall plug-like insert (12) has latching means (24) in order to engage behind the opening (14), wherein the sealing element (30) is compressed between the head (20) and the component upper side (18) of the component (16), **characterized in that** the wall plug-like insert (12) is according to any of Claims 1 to 6.

## Patentansprüche

1. Dübelartiges Einsetzteil (12), das einen Kopf (20) und einen Schaft (22), der sich in eine Längsrichtung (11) von dem Kopf (20) erstreckt, aufweist, wobei der Schaft (22) konzipiert ist, um in eine Öffnung (14) in einem Bauteil (16), wie in einem Blech, mit dem Resultat eingeführt zu werden, dass der Kopf (20) auf einer Bauteiloberseite (18) des Bauteils (16) eingerichtet ist, und wobei ein Dichtelement (30) auf dem Kopf (20) eingerichtet ist, wobei das Dichtelement konzipiert ist, um eine Dichtung, die den Schaft (22) umgibt, zwischen dem Kopf (20) und der Bauteiloberseite (18) des Bauteils (16) herzustellen, wobei das Dichtelement aus einem Thermoplastelastomer oder aus einem vernetzten Gummimaterial hergestellt ist, wobei das Dichtelement (30) als eine flache ringförmige Scheibe (32) konzipiert ist, die eine Oberseite aufweist, die dem Kopf (20) zugewandt ist, und eine entgegengesetzte untere Seite, die mit dem Bauteil (16) assoziiert werden kann, und wobei ein Ringwulst (38, 40; 40) auf der Oberseite und der Unterseite der flachen ringförmigen Scheibe (32) gebildet ist, wobei die ringförmige Scheibe (32) eine erste Stärke (L1) entlang der Längsrichtung (11) aufweist, wobei der Ringwulst (38, 40; 40) eine zweite Stärke (L2) entlang der Längsrichtung (11) aufweist, wobei der Ringwulst (38, 40) an einem äußeren Umfang (34) der ringförmigen Scheibe (32) gebildet ist, und **dadurch gekennzeichnet, dass** das Verhältnis der zweiten Stärke (L2) zu der ersten Stärke (L1) in einem Bereich von 1,3 bis 2 liegt, dass der Kopf (20) eine ringförmige Vertiefung (28) auf einer Längsseite, die dem Schaft (22) zugewandt ist, aufweist, wobei das Dichtelement (30) in die Vertiefung eingesetzt ist, und dass ein äußerer Umfang (34) der ringförmigen Scheibe (32) auf einem inneren Umfang der ringförmigen Vertiefung (28) ruht.

2. Dübelartiges Einsetzteil nach Anspruch 1, **dadurch gekennzeichnet, dass** das Dichtelement (30) aus einem thermoplastischen Styrolblockcopolymer-(TPS)-Elastomer hergestellt ist.

3. Dübelartiges Einsetzteil nach Anspruch 1 oder 2, **dadurch gekennzeichnet, dass** der Ringwulst (38, 40; 40) eine radiale innere Seite und eine radial äußere Seite in radialem Schnitt aufweist, wobei die radiale äußere Seite als eine Stufe (42) konzipiert ist, die in die Längsrichtung (11) ausgerichtet ist, und/oder wobei die radial innere Seite gerundet ist.

4. Dübelartiges Einsetzteil nach einem der Ansprüche 1 bis 3, **dadurch gekennzeichnet, dass** der Ringwulst (38, 40; 40) in die Längsrichtung (11) zu dem Schaft (22) in Bezug auf den Kopf (20) auf der unteren Seite der flachen ringförmigen Scheibe (32) vorragt.

5. Dübelartiges Einsetzteil nach einem der Ansprüche 1 bis 4, **dadurch gekennzeichnet, dass** das Dichtelement (30) in die Längsrichtung (11) in Bezug auf den Kopf (20) vorragt.

6. Dübelartiges Einsetzteil nach einem der Ansprüche 1 bis 5, **dadurch gekennzeichnet, dass** der Ringwulst (40) in die Längsrichtung (11) in Bezug auf den Kopf (20) vorragt.

7. Verfahren zum Erzeugen einer Befestigungsanordnung (10), das die folgenden Schritte umfasst:
Installieren eines dübelartigen Einsetzteils (12) in einer Öffnung (14) in einem Bauteil (16), wobei das dübelartige Einsetzteil (12) Einrastmittel (24) aufweist, um hinter der Öffnung (14) einzugreifen, wobei das Dichtelement (30) zwischen dem Kopf (20) und der Bauteiloberseite (18) des Bauteils (16) komprimiert ist, **dadurch gekennzeichnet, dass** das dübelartige Einsetzteil (12) einem der Ansprüche 1 bis 6 entspricht.

## Revendications

1. Insert de type cheville (12), ayant une tête (20) et une tige (22) s'étendant dans une direction longitudinale (11) à partir de la tête (20), dans laquelle la tige (22) est conçue pour être introduite dans une ouverture (14) dans un composant (16), tel qu'une tôle, avec pour résultat que la tête (20) est agencée sur un côté supérieur de composant (18) du composant (16), et dans laquelle un élément d'étanchéité (30) est agencé sur la tête (20), ledit élément d'étanchéité étant conçu pour établir un joint d'étanchéité, entourant la tige (22), entre la tête (20) et le côté supérieur de composant (18) du composant (16), dans laquelle l'élément d'étanchéité est produit à partir d'un élastomère thermoplastique ou à partir d'un matériau de caoutchouc réticulé, dans laquelle l'élément d'étanchéité (30) est conçu comme un disque annulaire plat (32), qui possède un côté supérieur faisant face à la tête (20) et un côté inférieur opposé, qui est associable au composant (16), et dans laquelle un bourrelet annulaire (38, 40 ; 40) est formé sur le côté supérieur et sur le côté inférieur du disque annulaire plat (32), dans laquelle le disque annulaire (32) possède une première épaisseur (L1) le long de la direction longitudinale (11), dans laquelle le bourrelet annulaire (38, 40 ; 40) possède une seconde épaisseur (L2) le long de la direction longitudinale (11), dans laquelle le bourrelet annulaire (38, 40) est formé au niveau d'une circonférence externe (34) du disque annulaire (32), et **caractérisée en ce que** le rapport de la seconde épaisseur (L2) sur la première épaisseur (L1) est dans une plage de 1,3 à 2, **en ce que** la tête (20) possède un évidement annulaire (28) sur un côté longitudinal faisant face à la tige (22), dans lequel évidement est inséré l'élément d'étanchéité (30) et **en ce qu'**une circonférence externe (34) du disque annulaire (32) repose sur une circonférence interne de l'évidement annulaire (28).

2. Insert de type cheville selon la revendication 1, **caractérisée en ce que** l'élément d'étanchéité (30) est produit à partir d'un élastomère thermoplastique en copolymères séquencés de styrène (TPS).

3. Insert de type cheville selon la revendication 1 ou 2, **caractérisée en ce que** le bourrelet annulaire (38, 40 ; 40) possède un côté radialement interne et un côté radialement externe en section radiale, dans laquelle le côté radialement externe est conçu comme un gradin (42) aligné dans la direction longitudinale (11) et/ou dans laquelle le côté radialement interne est arrondi.

4. Insert de type cheville selon l'une des revendications 1 à 3, **caractérisée en ce que** le bourrelet annulaire (38, 40; 40) se projette dans la direction longitudinale (11) vers la tige (22) par rapport à la tête (20) sur le côté inférieur du disque annulaire plat (32).

5. Insert de type cheville selon l'une quelconque des revendications 1 à 4, **caractérisée en ce que** l'élément d'étanchéité (30) se projette dans la direction longitudinale (11) par rapport à la tête (20).

6. Insert de type cheville selon l'une quelconque des revendications 1 à 5, **caractérisée en ce que** le bourrelet annulaire (40) se projette dans la direction longitudinale (11) par rapport à la tête (20).

7. Procédé de production d'un agencement de fixation (10), comprenant l'étape suivante : l'installation d'un insert de type cheville(12) dans une ouverture (14) dans un composant (16), dans lequel l'insert(12) possède des moyens de verrouillage (24) permettant la mise en prise à l'arrière de l'ouverture (14), dans lequel l'élément d'étanchéité (30) est comprimé entre la tête (20) et le côté supérieur de composant (18) du composant (16), **caractérisé en ce que** l'insert de type cheville (12) est selon l'une quelconque des revendications 1 à 6.
